(19) **Europäisches Patentamt / European Patent Office / Office européen des brevets**

(11) **EP 1 865 639 A1**

(12) # EUROPEAN PATENT APPLICATION
published in accordance with Art. 158(3) EPC

(43) Date of publication:
**12.12.2007 Bulletin 2007/50**

(51) Int Cl.:
***H04J 13/02*** *(2006.01)*

(21) Application number: **05813777.9**

(22) Date of filing: **25.11.2005**

(86) International application number:
**PCT/CN2005/002008**

(87) International publication number:
**WO 2006/102811 (05.10.2006 Gazette 2006/40)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **29.03.2005   CN 200510033912**

(71) Applicant: **ZTE Corporation
Shenzhen,
518057 Guangdong (CN)**

(72) Inventors:
- **ZHAO, Meng,
  ZTE Plaza, Keji Road South
  Shenzhen,
  Guangdong518057 (CN)**
- **YU, Guanghui,
  ZTE Plaza, Keji Road South
  Shenzhen,
  Guangdong518057 (CN)**
- **WU, Yanwei,
  TE Plaza, Keji Road South
  Shenzhen,
  Guangdong518057 (CN)**
- **HU, Liujun,
  ZTE Plaza, Keji Road South
  Shenzhen,
  Guangdong518057 (CN)**
- **XIANG, Jiying,
  ZTE Plaza, Keji Road South
  Shenzhen,
  Guangdong518057 (CN)**
- **WANG, Zhijian,
  ZTE Plaza, Keji Road South
  Shenzhen,
  Guangdong518057 (CN)**

(74) Representative: **Gray, John James
Murgitroyd & Company
165-169 Scotland Street
Glasgow G5 8PL (GB)**

(54) **A METHOD AND AN APPARATUS FOR ELIMINATING THE NARROW-BAND INTERFERENCE IN THE SPREAD SPECTRUM SYSTEM**

(57)    A method and an apparatus for eliminating the narrow-band interference in the spread spectrum system, comprises the following steps of: during the accumulated period of time, extracting N points one by one from the sampling digital signal to perform the spectrum transformation; at the same time updating the information and eliminating the interference; while updating information, calculating the accumulated energy value of the data of the N points after spectrum transformation during the accumulated period of time, and obtaining a threshold value thereby, then recording the identification information for points(out ofN) with accumulated energy value greater than the threshold value; when processing interference elimination, searching for the points corresponding to the N output data after each spectrum transformation in the current period of time according to the point identification information recorded in the previous period of time, reducing the data energy of these points to the level below the noise, then performing inverse spectrum transformation of the data and outputting it. The corresponding apparatus comprises a spectrum transformation unit, an interference elimination control unit, an interference elimination unit and an inverse spectrum transformation unit. The present invention can greatly decrease the calculation and the hardware need for real-time processing.

EP 1 865 639 A1

fig. 2

## Description

## Technical Field

The present invention relates to interference elimination in wireless communication system, and more specifically, to a method and an apparatus for eliminating the narrow-band interference in spread spectrum communication system.

## Background Art

The spread spectrum communication system becomes more and more popular in today's world. The spread spectrum or pseudo-noise code (PN) modulation can decrease the interference from other wireless signals and users. When the interference is a narrow-band signal, it may spread to the whole frequency band during the cross-correlation between receiving signal and PN sequence, and thus weaken the effect of the interference. Therefore, the spread spectrum signal can weaken the narrow-band interference to some extent.

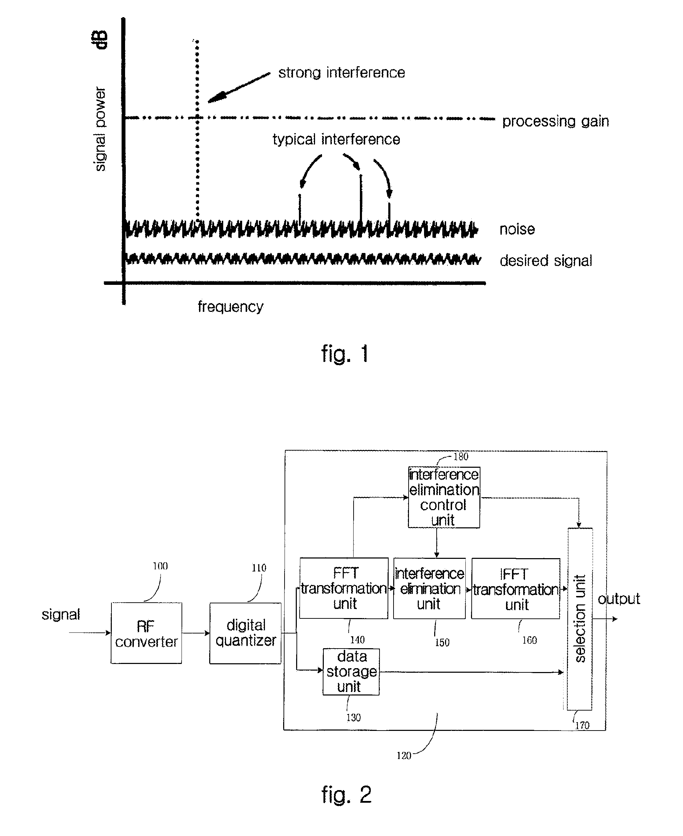

The typical spectrum of a spread spectrum signal (such as spreading spectrum by PN sequence), is submerged in the noise, as shown in Figure 1. A desired signal is the signal energy actually transmitted by the mobile station, and noise is the additive interference. Obviously, the energy of the spread desired signal is usually less than that of the noise. "Strong interference" generally refers to block signals or the signals transmitted by TV, wireless stations or communication devices in the vicinity, and "typical interference" refers to the signals transmitted by low power sources, such as amateur radio. Processing gain denotes the level of the interference signal tolerable for the spread spectrum signal of the mobile station. The spread spectrum signal can be restored when affected by typical interference, but can not be restored when there exists strong interference. Moreover, there will be a decrease in system performance, though the signal can be restored in the case of typical interference.

Before applying CDMA communication system, the frequency band is always swept to protect CDMA signal from interference of the narrow-band signal, but some burst signals can not be totally forbidden easily because of their burst characteristic. Therefore, the narrow-band interference shows disorder and randomness. For code division multiple access (CDMA) system, the narrow-band interference can result in increase in call drop rate and congestion rate, overload of the RF power control system, increase in the power dissipation of the mobile station, and decrease in the coverage scope of the base station. Under the extreme condition, interference with high power may even block the whole cell, resulting in the failure of a normal communication. Therefore, a good solution method of eliminating the influence of the narrow-band interference signal on CDMA signal should be found to ensure the communication quality.

The methods for processing narrow-band interference can be divided into two categories:

One category is to make the signal (usually for analogue process) pass through a narrow-band notch filter or a group of notch filters, which is generally achieved via acoustic surface technology. Frequency of the interference signal is estimated and according to the result of estimation, a narrow-band trap device is placed where the interference signals (phase-locked loop can also be used to trace the interference signal) exists. But the analogue technology itself has limitations and lacks flexibility.

The other category is methods of elimination in frequency domain, which is generally achieved via digital processing. After digitalized, the signal is Fourier transformed into frequency domain, and after the data is processed in frequency domain, it is inverse Fourier transformed into time domain and output. The method for processing the interference signal in frequency domain can be summed up into two classes. One is to apply filter to the data in frequency domain to filter the effect of interference, and it is suitable for cases with known bandwidth and position of the interference. This method has some limitation when it is impossible to determine the interference position in frequency domain, the interference bandwidth and the number of interferences, for it is difficult to design a fully adaptive filter. The other one is to calculate the signal amplitude at each frequency, and compare it with the threshold value, set 0 for the signals surpassing the threshold value or decrease them to the noise level. This method can adaptively process several interferences with different interference bandwidths and variable interference frequency.

However, when processing with this method, it needs to calculate the threshold and make comparison for each data sampling, continuously estimate the spectrum and limit the power spectrum in a certain range. The amount of calculation required is relatively large for data in broadband system with high speed, resulting in difficulty in the real-time implementation of hardware. Moreover, this method still Fourier transforms and inversely transforms the data when no narrow-band signal is detected, which is a waste of system resources. In addition, the way of determining the threshold value in this method is susceptible to the influence of the narrow-band interference, its threshold is not stable enough, which may result in misjudgment.

## Summary of the Invention

In order to solve the technical problem, the present invention provides a method and an apparatus for eliminating the narrow-band interference in the spread spectrum communication system to reduce the amount of calculation and real-time requirement for the hardware.

In order to solve the foregoing technical problem, the present invention provides a method for eliminating the narrow-band interference in the spread spectrum communication system, which includes the following steps of:

(a) during each set accumulated period of time, extracting N sampling points one by one from the digital signal obtained by sampling received data to perform the spectrum transformation; then updating the information and eliminating the interference at the same time, wherein the process of updating information includes the following steps of:
(b) during the set accumulated period of time, calculating the accumulated power values of the data of the N sampling points after the spectrum transformation respectively, and obtaining a threshold value based on the N accumulated power values;
(c) comparing said N accumulated power values with said threshold, and recording the identification information for points with accumulated power value larger than the threshold;

The process of eliminating the interference includes the following step of:

(b') searching for the corresponding point for the N output data after each spectrum transformation in the current period of time according to the identification information of the points recorded in the previous period of time, reducing the power value of the data of these points to the level below the noise, then performing inverse spectrum transforming to the data after adjustment and output it as resultant data.

Furthermore, the foregoing method may have the following feature: the extracted N digital signals are stored in said step (a), and before performing said step (b') in the process of eliminating the interference, whether there is identification information of points with accumulated power value greater than said threshold recorded in the previous time period is determined; if there is, step (b') is performed; otherwise, the N points of digital data stored in step (a) obtained by sampling is output as the resultant data every time, ending.

Furthermore, the foregoing method may have the following feature: in said step (c), when calculating said threshold, the minimum value of said N power accumulated values is picked out and multiplied with a coefficient larger than 1 to get said threshold.

Furthermore, the foregoing method may have the following feature: in step (c), the minimum values of the power accumulated values are averaged according to said accumulated time span to get the minimum power value; in said step (b'), the data power value corresponding to said points recorded in the previous period of time is reduced to the minimum power value recorded in the previous period of time.

Furthermore, the foregoing method may have the following feature: said threshold is 2.0 to 4.0 times of the minimum of said power accumulated values.

Furthermore, the foregoing method may have the following feature: said set accumulated time period is 60~120ms.

Furthermore, the foregoing method may have the following feature: said N is chosen according to the precision requirement for identifying the narrow-band interference, and is at least larger than the value obtained by the system data sampling rate divided by the bandwidth of the narrow-band interference to be identified.

Furthermore, the foregoing method may have the following feature: said spectrum transformation is fast Fourier transformation, cosine transformation or wavelet transformation.

In order to solve the foregoing problem, the present invention also offers an apparatus for eliminating the narrow-band interference in the spread spectrum system, which is characterized in including sequentially connected spectrum transformation unit, interference elimination unit and inverse spectrum transformation unit, and the interference elimination control unit which is connected with said spectrum transformation unit and said interference elimination unit, wherein:

Said spectrum transformation unit is used to perform spectrum transformation to the externally input N points of digital signals, and output the resultant data of the N points to said interference elimination unit and said interference elimination control unit;

Said interference elimination control unit is used to respectively calculate the power accumulated values of the N sampling point data after the spectrum transforming during each set accumulated period of time, calculate a threshold value according to said N power accumulated values, and compare the N power accumulated values with said threshold, and record the identification information of points with power accumulated value larger than the threshold;

Said interference elimination unit is used to adjust, according to the identification information of the points with power accumulated value larger than the threshold recorded in the previous period of time, the power value of spectrum transformation data of the corresponding points in the current period of time to the level below that of the noise, then output it to said inverse spectrum transformation unit;

Said inverse spectrum transformation unit is used to perform the inverse spectrum transformation for the input data and output the result.

Furthermore, the foregoing apparatus may have the following feature: it includes a data storage unit and a selection unit which are connected with each other, and said selection unit is connected to said inverse spectrum transformation unit and interference elimination control unit, wherein:

Said data storage unit is used to store the externally input N points of digital signal and output these data to said selection unit;

When there exist points with power accumulated value larger than the threshold in current period of time, said interference elimination control unit output the indication signal of existent narrow-band interference to said selection unit, as basis for said selection unit to select output data in next period of time.

Said selection unit is used to select the data output from inverse spectrum transformation unit if indication signal of existent narrow-band interference is received, otherwise, output data stored in said data storage unit.

Furthermore, the foregoing apparatus may have the following feature: said interference elimination control unit includes:

N power calculation units for respectively receiving the N complex signals output from said spectrum transformation unit, calculating their power values and outputting respectively to the N accumulation units;

N accumulation units connected with said N energy calculation units respectively, for accumulating the calculated power value obtained each time respectively in said accumulated period of time to get N power accumulated values;

An accumulative counting control output unit, connected with said N accumulation units, for outputting said N accumulated power values and performing zero clearing for said N accumulation units when the current times of accumulations reaches the accumulated counting number corresponding to a certain accumulated period of time;

A threshold value calculation unit connected with said accumulated counting control output unit, for calculating a threshold value according to said N accumulated power values;

A comparison unit connected with said threshold value calculation unit and said accumulated counting control output unit, for comparing said N accumulated power values with said threshold value, and outputting the identification information of those points with accumulated power values larger than the threshold value;

A record unit connected with said comparison unit, for storing identification information of the points with accumulated power values larger than the threshold value, and zero clearing the stored information when there is no point with accumulated power value larger than the threshold in the present time segment.

Furthermore, the foregoing apparatus may have the following feature: said threshold value calculation unit further includes:

A minimum value unit connected with said accumulated counting control output unit, for receiving said N accumulated power values and selecting the minimum one to output;

A multiplier connected with said minimum value unit, for multiplying the minimum value with a coefficient larger than 1, and outputting the result as said threshold value.

Furthermore, the foregoing apparatus may have the following feature: said interference elimination control unit also includes a time-average unit connected with said minimum value unit and said interference elimination unit, for dividing the minimum value of the accumulated power result with said accumulated period of time to get the minimum power value; said interference elimination unit adjusts the power value to be the minimum power value when adjusting the power value of the spectrum transformed data.

Furthermore, the foregoing apparatus may have the following feature: the coefficient determined by said multiplier is 2~4.

Furthermore, the foregoing apparatus may have the following feature: the accumulated counting value determined by said accumulated counting control output unit corresponds to the accumulated period of 60~120ms.

It can be seen that the present invention uses the power spectrum estimated for a period of time to judge narrow-band interference, record the position where the narrow-band interference appears. The process for the real-time data is limited to the data in the position of the narrow-band interference obtained according to the previous period of time, and thus the amount of calculation is dramatically reduced. Moreover, the threshold calculation and comparison calculation are performed every period of time, with no need to process each data segment, which will greatly reduce the real-time requirement for the hardware. Compared with the prior art, satisfying performance can be obtained with largely reduced amount of calculation for real-time of hardware, as long as the length of the accumulated time is properly selected.

In addition, aimed at eliminating the narrow-band interference in the spread spectrum communication system, the present invention transforms the signal to the frequency domain, estimates the power spectrum via averaging several periodograms in a period of time, and then uses the obtained power spectrum to calculate the judgment threshold of the narrow-band interference and eliminates the effect of large power value. The obtained threshold is very stable and can adaptively prevent the occurrence of misjudgment in every situation.

In addition, the present invention may be further designed to have a selection unit, when there is no narrow-band interference detected, the operation of module with relatively larger amount of calculation, such as IFFT transformation unit, can be shielded, therefore the occupation of the hardware resources can be further reduced. In short, the present invention has simple calculation, can obviously reduce narrow-band interference and can use real-time implementation of the hardware to reduce the requirement for the hardware.

**Brief Description of Drawings**

Figure 1 is an illustration of the spectrum power of the general spread spectrum signal.

Figure 2 is a block diagram of the structure of the apparatus according to the embodiment of the present invention.

Figure 3 is an illustration of the interference elimination control unit in Figure 2.

## Preferred Embodiment of the Present Invention

The present invention will be described in further detail with reference to the embodiment and the accompanying drawings. Figure 2 is a block diagram of the apparatus structure according to the embodiment of the present invention.

As shown in Figure 2, the apparatus of the embodiment includes a RF converter 100, a digital quantizer 110 and an interference elimination device 120. In the foregoing apparatus, signal is received by the RF converter 100, directed to the digital quantizer 110 for sampling and converted into digital signal. Then digital signals of N points are picked up every time and input to the interference elimination device 120 for FFT. The value of N is related with the minimum narrow-band interference bandwidth that can be identified. In an embodiment of the present invention, the bandwidth of the spread spectrum signal is 1.2288MHz, the data sampling rate is 2* 1.2288MHz, in order to identify 30kHz narrow-band interference, at least $2 \times 1.2288 \times 10^6/(30 \times 10^3) = 81.92$ namely 128 points for FFT should be applied. Obviously, the more points for FFT are, the stronger the ability of identifying the narrow-band interference is, but the more amount of calculation for the hardware implementation is, and the N can be picked up according to respective systems and the requirement of identification precision. N=256 is applied in the foregoing embodiment.

Wherein the interference elimination device 120 includes the following units:

A data storage unit 130 for storing the digital signal input by the digital quantizer 110 and output to the selection unit 170.

A FFT transformation unit 140 for performing FFT of N points for the digital signals input by the digital quantizer 110, and inputting the obtained data of N points to the interference elimination unit 150 and an interference elimination control unit 180.

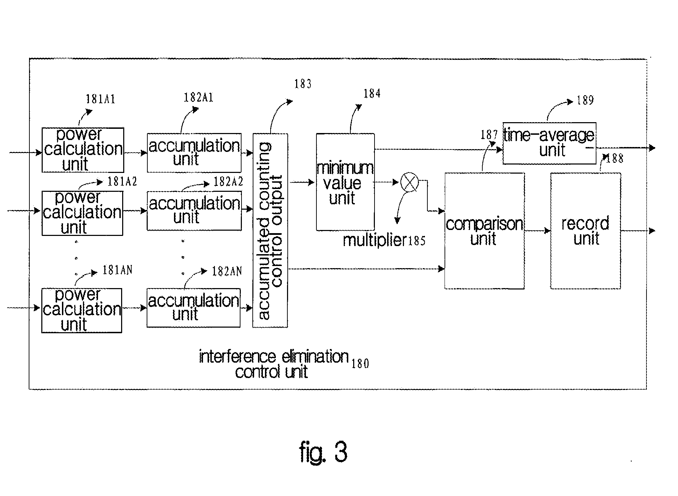

The interference elimination control unit 180 for calculating the accumulated power values of the N sampling points and comparing them with a threshold related to the minimum value of the accumulated power values, and recording the identification information (such as position information or identification information) of those points with accumulated power values larger than the threshold, and the new minimum value (namely the energy value obtained by time-averaging the minimum values of the accumulated power values), and outputting the indication signal indicating whether there is narrow-band interference. As shown in Figure 3, the interference elimination control unit 180 further includes:

N power calculation units $181A_1 \sim 181A_N$, which respectively receive N complex signals output by the FFT transformation unit 140, calculating squares of the N complex signal modulus and outputting the results to N accumulation units $182A_1 \sim 182A_N$;

N accumulation units $182A_1 \sim 182A_N$ for accumulating the power values obtained from each calculation by the N power calculation units in an accumulated period of time.

an accumulated counting control output unit 183 for determining whether the current accumulated times reaches the set accumulated counting value (namely whether the data accumulation in an accumulated period of time have been completed), if yes, outputting the N accumulated results to the minimum value unit 184 and the comparison unit 187, meanwhile, zero clearing the accumulation unit 182;

a minimum value unit 184 for finding out the minimum value of the N accumulated results and outputting it to a multiplier 185 and a time-average unit 189;

the multiplier 185 for multiplying the minimum value of the accumulated results with a certain times and outputting the result as a threshold to the comparison unit 187;

the comparison unit 187 for comparing said N accumulated results with said threshold value, and storing the identification information of those points with accumulated power values larger than the threshold into a record unit 188;

the record unit 188 for storing the identification information of those points with accumulated power values larger than the threshold, outputting the indication signal indicating existence of narrow-band interference to the selection unit 170 and zero clearing values in other positions. When there is no point with accumulated power value larger than the threshold in the current period of time, the positions corresponding to all points are zero cleared;

a time-average unit 189 for dividing the minimum value of the accumulated power results with the set accumulated count to get the minimum power value and outputting the result to the interference elimination unit 150. This is because that the interference elimination unit 150 relates to the data process of a single group, the time-average unit 189 needs to time-average the minimum values of the accumulated results in an accumulated period of time output by the minimum value unit 184.

Since the identification information of those points with accumulated power values larger than the threshold and the corresponding minimum energy value are updated in each accumulated time segment, the present invention can adaptively varies according to the change in the surroundings. At the same time, the present invention uses the power spectrum estimated for a period of time to judge narrow-band interference. The process for the real-time data is limited to the data in the position where the narrow-band interference appears in the previous period of time, and thus the amount of calculation is dramatically reduced. Moreover, the threshold calculation, the minimum value updating and comparison calculation occur once every other period of time, which will greatly reduce the real-time requirement for the hardware.

An interference elimination unit 150 is used to adjust the power value of the FFT data of the points in the current period of time to the minimum energy value obtained in the previous period of time according to the identification information, output by the record unit 188, of points with accumulated power value larger than the threshold, and output them to the IFFT transformation unit 160, and make no adjustment when there is no identification information output from the record unit 188.

An IFFT transformation unit 160 is used to perform inverse fast Fourier transformation to the input data and put the results to the selection unit 170.

A selection unit 170 is used to select data to output, and output directly the data from the data storage unit 130 if the indication that there is no narrow-band interference is received; otherwise, it outputs the data from the IFFT transformation unit 160.

In the embodiment of the present invention, if the record unit 188 in the interference elimination unit 180 has no indication that there is any identification information, the selection unit 170 directly output the data stored in the data storage unit 130 without performing the operation of the interference elimination unit 150 and the IFFT transformation unit 160, therefore further reducing hardware operation and saving hardware spending.

Based on the foregoing apparatus, the method for eliminating the narrow-band interference in the spread spectrum system in the embodiment includes the following steps:

Step 1, in each set period of time, N points of the digital signal obtained by sampling the received data are picked up one time by one time and stored, and fast Fourier transformation (FFT) is performed. N is determined by the minimum identifiable interference bandwidth;

Step 2, square of modulus of data obtained after FFT of each time, i.e., the power of the data, is calculated, to obtain the periodograms of the data segment. The periodograms is an estimation of the power spectrum, and the normal broadband signal in the power spectrum is submerged in the noise, while the power of the narrow-band interference is higher since the power is concentrated in some frequency points;

The process after step 2 can be divided into two parallel sub-processes, one is to update the identification information of those points with accumulated power values larger than the threshold and the minimum power value, namely the process of the information updating, as the basis of processing the interference elimination for the data in the next previous of time. The other one is to eliminate the interference for the data in the present period of time according to the identification information of the points and the minimum energy value, namely, the process of interference elimination. The processing flow of the information updating will be introduces firstly in the following:

Step 3, the power values of the N points data currently calculated are added to their respective calculated power values in the current period of time;

Accumulation can make the estimation result much closer to the actually power spectrum and more truly reflect the data characteristic. The span of the accumulated time can not be too short so as to guarantee stable power spectrum obtained in the accumulated time on the one hand; on the other hand, it should not be too long so as to ensure that the narrow-band interference characteristic in this period of time does not change dramatically to make the estimation result of the power spectrum capable of timely reflecting the change in the narrow-band interference in the spread spectrum signal. Generally, the duration time for the narrow-band interference is in seconds, therefore, the accumulated period of time can be chosen as 60~120ms, which will not cause great influence on the system's reactive capability to the narrow-band interference. In an example of the present invention, about 106.7ms is selected as the accumulated time span. The simulation result illustrates the selected span does not influence the system's capability in eliminating the narrow-band interference and can also obtain a relatively stable estimation result of the power spectrum. In other examples, 60ms, 120ms or any value between them can be selected.

Step 4, whether the accumulation times of the power of each point reaches the set accumulated counting number is determined; if yes, perform step 5, otherwise, return to step 1;

The accumulated counting number equals to the accumulated time divided by the product of the number N of the points for FFT and the data sampling interval. In an example of the present invention, the points for FFT is 256, the data sampling rate is $2\times 1.2288$MHz, the duration time for each sampling point is $\frac{1}{2*1.2288}\approx0.4069us$, and the accumulated counting number is $\frac{106.7*10^3}{256*0.4069}\approx1024$. The accumulated counting number or the accumulated time is determined according to the performance requirement desired by the system. For example, if it is desirable that the system is stable, the accumulated counting number or the accumulated time should be larger, and if it is desirable that the system rapidly react to the external interference, the accumulated counting number or the accumulated time should be smaller.

Step 5, the minimum value of the power accumulated results ofN points in a period of time is calculated;

The minimum value rather than the average value is calculated, because the current power spectrum is already relatively stable, and no over low value will appear, while the average value will be greatly influenced by the amount of the narrow-band interferences and the change of the strength. Furthermore, it only needs some comparison operation to get the minimum value, and the amount of calculation is relatively small.

Step 6, the foregoing minimum value is multiplied with a certain times to get a threshold for judgment, and the N accumulated results are compared with the threshold; if there is accumulated results larger than the threshold, perform step 7, otherwise, perform step 8;

In order to avoid misjudging the desired signal as interference, the selected times will influence the final system performance. Based on simulation result, the times is generally in the range of 2.0~4.0.

Step 7, the identification information of those points with accumulated power values larger than the threshold and the minimum power value obtained during this period of time are recorded for use in the next period of time; meanwhile, the values in other positions are zero cleared.

Step 8, the values in all position are zero cleared, namely, no identification information of any point is recorded.

Meanwhile, after step 2, the process for interference elimination includes the following steps:

Step 3', whether there are records of identification information of those points with the accumulated power values larger than the threshold in the previous period of time is determined; if yes, perform step 4', otherwise, perform step 5';

Step 4', for the N data output by each FFT in the current period of time, t the power value of the data corresponding to the points recorded in the previous period of time is adjusted to the minimum energy value obtained in the previous period of time, and IFFT is performed for the adjusted data and the resultant data are output, ending;

Step 5', in this period of time, the previously stored N point digital signals obtained by sampling is selected every time to output as the result data, ending.

The present invention has been implemented in the reverse link simulation of cdma_20001x. Through simulation, it can be confirmed that the influence on the system caused by several narrow-band interference in different time points and different positions in frequency bandwidth can be effectively reduced, thus the congestion rate of CDMA and dropping call rate are obviously decreased, the power dissipation of the mobile station is reduced.

The present invention may have some variations on the basis of the foregoing embodiment.

For example, the calculation method for the threshold value is not limited to applying the minimum value. In another embodiment, the power value is obtained by averaging N accumulated power values after removing several maximum power values or several maximum values and minimum values, or by other methods. Correspondingly, when adjusting the data power of the points after the spectrum transformation, it is not intended to limit to adjustment to the minimum power value but should below the noise level in the embodiment.

For example, in another embodiment, there may be no data storage unit 130 and selection unit 170, therefore the amount of calculation will be larger, but the hardware structure will be simpler.

For example, FFT transformation and IFFT transformation are only one kind of spectrum transformation, in another embodiment, cosine transformation, wavelet transformation and other methods of spectrum transformation can be applied.

**Industrial Application**

The present invention can be applied in the spread spectrum communication system, and the obtained threshold is very stable and can adaptively prevent the occurrence of misjudgment in every situation, and the amount of calculation for the real-time hardware can be greatly reduced while obtaining satisfying performance.

**Claims**

1. A method for eliminating narrow-band interference in a spread spectrum communication system, comprising the following steps of:

    (a) during each set accumulated period of time, extracting N points one by one from digital signals obtained by sampling received data to perform spectrum transformation;
    then performing processes of information update and interference elimination at the same time, wherein the process of information update comprises the following steps of:
    (b) during each set accumulated period of time, respectively calculating the accumulated power values of data of the N points after the spectrum transformation, and obtaining a threshold value based on the N accumulated power values;
    (c) comparing said N accumulated power values with said threshold, and recording identification information for points with accumulated power value larger than the threshold;
    The process of eliminating the interference comprises the following step of:
    (b') searching for corresponding points for N output data after each spectrum transformation in the current period of time according to the identification information of the points recorded in the previous period of time, reducing the data power values of these points to the level below the noise, then performing inverse spectrum transforming for the data after adjustment and outputting it as resultant data.

2. The method as claimed in claim 1, wherein in said step (a), the extracted N digital signals are also stored, and before performing said step (b') in the process of eliminating interference, whether there is identification information of point with accumulated power value greater than said threshold recorded in the previous time period is determined; if it is, step (b') is to be performed, otherwise, digital data ofN points stored in step (a) obtained by sampling are output as resultant data every time, ending.

3. The method as claimed in claim 1, wherein in said step (c), when calculating said threshold, the minimum value of said N power accumulated values is picked out and multiplied with a coefficient larger than 1 to get said threshold.

4. The method as claimed in claim 3, wherein in step (c), the minimum values of the power accumulated values are also averaged according to said accumulated time span to get the minimum power value; in said step (b'), the data power values corresponding to said points recorded in the previous period of time are reduced to the minimum power value recorded in the previous period of time.

5. The method as claimed in claim 3, wherein said threshold is 2.0 to 4.0 times of the minimum of said power accumulated values.

6. The method as claimed in claim 1, wherein said set accumulated time period is 60~120ms.

7. The method as claimed in claim 1, wherein said N is chosen according to the precision requirement for identifying the narrow-band interference, and is at least larger than the value obtained by the system data sampling rate divided by the bandwidth of the narrow-band interference to be identified.

8. The method as claimed in claim 1, wherein said spectrum transformation is fast Fourier transformation, cosine transformation or wavelet transformation.

9. An apparatus for eliminating narrow-band interference in a spread spectrum system, **characterized in that** it comprises a spectrum transformation unit, an interference elimination unit and an inverse spectrum transformation unit that are sequentially connected with each other, and an interference elimination control unit which is connected with said spectrum transformation unit and said interference elimination unit, wherein:

said spectrum transformation unit is used to perform spectrum transformation for the externally input N points of digital signals, and output the resultant data of the N points to said interference elimination unit and said interference elimination control unit;
said interference elimination control unit is used to respectively calculate the power accumulated values of the N point data after the spectrum transforming during each set accumulated period of time, calculate a threshold value according to said N power accumulated values, compare the N power accumulated values with said threshold, and record the identification information of points with power accumulated value larger than the threshold;
said interference elimination unit is used to adjust, according to the identification information of the points with power accumulated value larger than the threshold recorded in the previous period of time, the power value of spectrum transformation data of the corresponding points in the current period of time to the level below that of the noise, and then output it to said inverse spectrum transformation unit;
said inverse spectrum transformation unit is used to perform the inverse spectrum transformation to the input data and output the result.

10. The apparatus as claimed in claim 9, **characterized in that** it also comprises a data storage unit and a selection unit which are connected with each other, and said selection unit is connected to said inverse spectrum transformation unit and interference elimination control unit, wherein:

said data storage unit is used to store the externally input N points of digital signal and output these data to said selection unit;
when there exist points with power accumulated value larger than the threshold in current period of time, said interference elimination control unit outputs the indication signal indicating existence of narrow-band interference to said selection unit, as basis for said selection unit to select output data in next period of time;
said selection unit is used to select the data output from inverse spectrum transformation unit if indication signal indicating existence of narrow-band interference, otherwise, output the data stored in said data storage unit.

11. The apparatus as claimed in claim 9, wherein said interference elimination control unit comprises:

N power calculation units used to respectively receive the N complex signal output from said spectrum transformation unit, calculate their power values and output respectively to the N accumulation units;

N accumulation units, connected with said N energy calculation units respectively, used to accumulate the calculated power value obtained each time respectively in said accumulated period of time to get N power accumulated values;

an accumulative counting control output unit, connected with said N accumulation units, used to output said N accumulated power values and perform zero clearing for said N accumulation units when the current times of accumulations reaches the accumulated counting number corresponding to a certain accumulated period of time;

a threshold value calculation unit, connected with said accumulated counting control output unit, used to calculate a threshold value according to said N accumulated power values;

a comparison unit, connected with said threshold value calculation unit and said accumulated counting control output unit, used to compare said N accumulated power values with said threshold value, and output the identification information of those points with accumulated power values larger than the threshold value;

a record unit, connected with said comparison unit, used to store identification information of the points with accumulated power values larger than the threshold value, and when there is no point with accumulated power value larger than the threshold in the present time segment, the stored information is zero cleared.

12. The apparatus as claimed in claim 9, wherein said threshold value calculation unit further comprises:

a minimum value unit, connected with said accumulated counting control output unit, used to receive said N accumulated power values and select the minimum one to output;

a multiplier, connected with said minimum value unit, used to multiply the minimum value with a coefficient larger than 1, and output the result as said threshold value.

13. The apparatus as claimed in claim 12, wherein said interference elimination control unit also comprises a time-average unit connected with said minimum value unit and said interference elimination unit, used to divide the minimum value of the accumulated power result with said accumulated period of time to get the minimum power value; said interference elimination unit adjusts the power value to be the minimum power value when adjusting the power value of the spectrum transformed data.

14. The apparatus as claimed in claim 12, wherein the coefficient determined by said multiplier is 2-4.

15. The apparatus as claimed in claim 11, wherein the accumulated counting value determined by said accumulated counting control output unit corresponds to an accumulated period of 60~120ms.

fig. 1

fig. 2

fig. 3

**EP 1 865 639 A1**

<table>
<tr><td colspan="2" align="center">INTERNATIONAL SEARCH REPORT</td><td>International application No.<br><br>PCT/CN2005/002008</td></tr>
</table>

**A. CLASSIFICATION OF SUBJECT MATTER**

IPC[8]: H04J 13/02(2006.01)i

According to International Patent Classification (IPC) or to both national classification and IPC

**B. FIELDS SEARCHED**

Minimum documentation searched (classification system followed by classification symbols)

IPC[8]: H04J

Documentation searched other than minimum documentation to the extent that such documents are included in the fields searched

Electronic data base consulted during the international search (name of data base and, where practicable, search terms used)

WPI, EPODOC, PAJ, CNPAT; spread spectrum, narrow band, interference

**C. DOCUMENTS CONSIDERED TO BE RELEVANT**

| Category* | Citation of document, with indication, where appropriate, of the relevant passages | Relevant to claim No. |
|---|---|---|
| A | CN1224167A (LUCENT TECHNOLOGIES INC) 28.Jul.1999(28.07.1999), see the whole document | 1-15 |
| A | CN1240070A (MOTOROLA INC) 29.Dec.1999(29.12.1999), see the whole document | 1-15 |
| A | CN1290429A (BRITISH TELECOM PLC) 04.Apr.2001(04.04.2001), see the whole document | 1-15 |

☐ Further documents are listed in the continuation of Box C.    ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim (S) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&"document member of the same patent family |

| Date of the actual completion of the international search<br><br>16.Jan.2006(16.01.2006) | Date of mailing of the international search report<br><br>2 3 ° FEB 2006 (2 3 ° 0 2 ° 2 0 0 6) |
|---|---|
| Name and mailing address of the ISA/CN<br>The State Intellectual Property Office, the P.R.China<br>6 Xitucheng Rd., Jimen Bridge, Haidian District, Beijing, China 100088<br>Facsimile No. (86-10)62019451 | Authorized officer<br><br>FAN Xiaohan<br><br>Telephone No. (86-10)62084540 |

Form PCT/ISA /210 (second sheet) (April 2005)

## INTERNATIONAL SEARCH REPORT
Information patent family members

Search request No.
PCT/CN2005/002008

| Patent document cited in search report | Publication date | Patent family member(s) | Publication date |
|---|---|---|---|
| CN1290429A | 04.04.2001 | WO9938270A2 | 29.07.1999 |
| | | EP1050115A2 | 08.11.2000 |
| | | JP2002502143T | 22.01.2002 |
| | | US6807222B | 19.10.2004 |
| CN1240070A | 29.12.1999 | WO9825354A1 | 11.06.1998 |
| | | US5793795A | 11.08.1998 |
| | | EP0941582A1 | 15.09.1999 |
| | | EP0941582B1 | 17.03.2004 |
| | | DE69728159E | 22.04.2004 |
| CN1224167A | 28.07.1999 | JP3400371B2 | 28.04.2003 |
| | | EP0930724A2 | 21.07.1999 |
| | | AU1131199 A | 05.08.1999 |
| | | CA2256965 A1 | 14.07.1999 |
| | | JP11298442 A | 29.10.1999 |
| | | BR9806336 A | 21.12.1999 |
| | | KR99067876 A | 25.08.1999 |
| | | US6130907 A | 10.10.2000 |
| | | AU743774 B | 07.02.2002 |
| | | CA2256965 C | 02.04.2002 |
| | | KR346323 B | 26.07.2002 |

Form PCT/ISA /210 (patent family annex) (April 2005)